# EUROPÄISCHE PATENTSCHRIFT

(11) **EP 3 283 330 B1**
(45) Veröffentlichungstag und Bekanntmachung des Hinweises auf die Patenterteilung: **24.06.2020**
(21) Anmeldenummer: 16718621.2
(22) Anmeldetag: 13.04.2016
(51) Int. Cl.: B60R 1/00, B60R 9/045, B60J 7/00, B60R 9/055

(54) **VIRTUELLE PANORAMA- BZW. SCHIEBEDACH ANORDNUNG**
ARRANGEMENT OF A VIRTUAL SUNROOF OR PANORAMIC ROOF
AGENCEMENT D'UN TOIT OUVRANT OU PANORAMIQUE VIRTUEL

(30) Priorität: 13.04.2015 DE 102015105612
(43) Veröffentlichungstag der Anmeldung: 21.02.2018
(73) Patentinhaber: SES Solutions GmbH, 01705 Freital (DE)
(72) Erfinder: ESPIG, Serle, 01705 Freital (DE)
(74) Vertreter: RGTH
(86) Internationale Anmeldenummer: PCT/EP2016/058122
(87) Internationale Veröffentlichungsnummer: WO 2016/166160

(56) Entgegenhaltungen:
- WO-A2-2005/079309
- WO-A2-2014/147082
- US-A1- 2013 235 351

## Beschreibung

### Technisches Gebiet der Erfindung

Die Erfindung betrifft eine Anordnung für ein Dach eines Kraftfahrzeugs.

### Stand der Technik

Bekannte Panorama- bzw. Schiebedächer für Kraftfahrzeuge sind dazu eingerichtet, das Dach des Fahrzeugs zu öffnen, ein freieres, weniger beengtes Gefühl im Fahrzeug zu vermitteln, die Umgebung ganzheitlicher wahrzunehmen und/oder Sonne zu "tanken". Aufgrund der Verbreitung von Klimaanlagen wird immer weniger Gebrauch davon gemacht das Schiebedach zu öffnen, einige Panoramadächer lassen sich nur noch leicht kippen oder gar nicht mehr öffnen. Mit Gebrauch eines Panorama- bzw. Schiebedaches steigt die Sonnenbrandgefahr und somit das Krebsrisiko, Pollen, Feinstaub und Ozon können sich zudem negativ auf die Atemwege auswirken, der Fahrtwind kann Erkältungen verursachen, Lärm die Aufmerksamkeit negativ beeinflussen.

Panorama bzw. Schiebedächer werden oftmals von den Fahrzeugherstellern als Sonderausstattung angeboten und ab Werk eingebaut. Als wahlweise Sonderausstattung erhöht sich für den Fahrzeughersteller dadurch die Karosserievariantenvielfalt und somit die Komplexität im Montageprozess, d.h. der Fertigungsaufwand. Bei einem Unfall, bei dem sich das Fahrzeug überschlägt, kann das Schiebedach nachteilig sein. Durch den Einbau unterm Fahrzeugdach geht bei vielen Schiebedächern an vielen Stellen Kopffreiheit verloren - zum Teil mehr als 5 cm. Schiebedächer können zudem mit der Zeit undicht werden, sie erhöhen - insbesondere im geöffneten Zustand - den Windwiederstand und damit den Kraftstoffverbrauch und die Fahrgeräusche. Zudem verschlechtern sie die Fahrdynamik, da zusätzliches Gewicht am Dach den Schwerpunkt bzw. die Kurvensteifigkeit negativ beeinflusst, ebenso wird die zugelassene Dachlast zum Teil reduziert. Sobald eine Dachbox montiert ist, wird ein Panoramadach bzw. Schiebedach wenigstens nahezu vollständig verdunkelt.

Aus der Druckschrift DE 10 2011051891 A1 ist eine integrierbare faltbare Dachboxen aus Leichtbaumaterialien bekannt, welche die Dachfläche vollständig oder zu großen Teilen bedeckt und zu jeder Zeit auf dem Fahrzeugdach verbleibt bzw. verbleiben kann. Nachteilig ist dabei, dass das eine Kombination einer integrierten faltbare Dachbox mit Schiebedach zwar technisch möglich, jedoch sehr komplex in der Umsetzung ist, und viele der o.g. Nachteile eines Schiebedaches nicht behoben werden.

Aus der US 2013/0235351 A1 ist ein virtuelles Sonnendachsystem zur Bereitstellung eines virtuellen Sonnendachs an einer Innenseite eines Fahrzeugs zur Ansicht eines Fahrzeugfahrgastes bekannt.

Aus der WO 2014/147082 A2 ist Verfahren zur Überstellung von Transportgut von einem Absender zu einem Empfänger durch einen Zusteller bekannt, wobei der Absender das Transportgut in einen abschließbaren Transportbehälter einbringt.

### Darstellung der Erfindung: Aufgabe, Lösung, Vorteile

Die Erfindung hat die Aufgabe, ein Dach für ein Fahrzeug vorzuschlagen, das einem Benutzer des Fahrzeugs ein weniger beengtes Gefühl im Fahrzeug vermittelt und ihm erlaubt, die Umgebung ganzheitlich wahrzunehmen, ohne dass es die vorbeschriebenen Nachteile mit sich bringt und ohne dass diese Wahrnehmung durch eine Dachbox verdeckt wird.

Diese Aufgabe wird gelöst durch eine Anordnung für ein Dach eines Kraftfahrzeugs, umfassend wenigstens eine Sensoreinrichtung, insbesondere Bildaufnahmeeinrichtung, zum Erfassen einer Umgebung des Kraftfahrzeugs, insbesondere zum bildlichen Aufnehmen dieser Umgebung, sowie wenigstens eine Wiedergabeeinrichtung, insbesondere Bildwiedergabeeinrichtung, die an einer Innenfläche des Daches, insbesondere in einer Position eines Schiebe- und/oder Panoramadaches, angeordnet ist zum Wiedergeben einer virtuellen Darstellung, insbesondere einer virtuellen bildlichen Darstellung, der von der wenigstens einen Sensoreinrichtung aufgenommenen Umgebung, wobei die virtuelle Darstellung im Wesentlichen gleich einer Wahrnehmung, insbesondere Ansicht, der Umgebung des Kraftfahrzeuges ist, wobei das Dach mit einer faltbaren und/oder integrierbaren Dachbox ausgebildet ist und wobei wenigstens eine der wenigstens einen Sensoreinrichtung an der Dachbox, insbesondere in, an und/oder auf einem Deckel der Dachbox, angeordnet ist.

Vorteilhaft kann zudem wahlweise die wenigstens eine Sensoreinrichtung, insbesondere Bildaufnahmeeinrichtung, zusätzlich eingerichtet sein zum Erfassen wenigstens eines Teilbereichs eines zum Aufenthalt wenigstens eines Nutzers eingerichteten Innenraums, insbesondere zum bildlichen Aufnehmen wenigstens dieses Teilbereichs dieses Innenraums. Die wenigstens eine Wiedergabeeinrichtung kann sich wahlweise zusätzlich über die Innenfläche des Daches hinaus erstrecken, bevorzugt über weitere Innenflächen des Innenraums. Besonders bevorzugt erstreckt sich die wenigstens eine Wiedergabeeinrichtung über einen Teilbereich einer Innenfläche der Windschutzscheibe. Weiter wahlweise erstreckt sich die wenigstens eine Wiedergabeeinrichtung über einen Teilbereich einer Außenfläche des Kraftfahrzeugs, insbesondere der Windschutzscheibe. Damit kann wahlweise zusätzlich z.B. eine virtuelle Darstellung, insbesondere eine virtuelle bildliche Darstellung, der von der wenigstens einen Sensoreinrichtung aufgenommenen Umgebung auch auf der Innenfläche oder dem Teilbereich der Innenfläche der Windschutzscheibe wiedergegeben werden, oder es kann eine virtuelle Darstellung, insbesondere eine virtuelle bildliche Darstellung, des von der wenigstens einen Sensoreinrichtung aufgenommenen Innenraums oder eines Teilbereichs davon auch auf der Innenfläche oder dem Teilbereich der Innenfläche der Windschutzscheibe und/oder auf der Außenfläche oder dem Teilbereich der Außenfläche der Windschutzscheibe wiedergegeben werden.

An dieser Stelle sei erwähnt, dass aus dem Internetauftritt http://www.cnet.com/news/toyota-develops-augmented-reality-windows-sunroof/, Eintrag gelesen am 10.04.2015 um 12:09 Uhr, ein Vorschlag der Herstellerfirma Toyota und des "Copenhagen Institute of Interaction Design" entnehmbar ist, ein Kraftfahrzeug mit Fenstern und einem Panorama-Sonnendach mit sogenannter "Erweiterter Realität" auszustatten. Ein derartiges Fenster soll einem Fahrgast ermöglichen, auf einer Oberfläche des Fensters, d.h. der Fensterscheibe, zu zeichnen, zu skizzieren, zu kritzeln, einen Szenenausschnitt nahe heranzuholen, Charakteristika der vorüberziehenden Szenen in die örtliche Sprache zu übersetzen und Entfernungen zu Geländeobjekten abzuschätzen. Ein derartiges Sonnendach soll Informationen zum Himmel anzeigen sowie virtuelle Sternbilder, vermutlich nachts.

In der breitesten Ausprägung wird die erfindungsgemäße Anordnung gebildet durch einen Zusammenschluss von Sensoren, Geräten und Applikationen zur Formung eines Panorama- bzw. Schiebedaches für Kraftfahrzeuge, das die Außenwelt, d.h. die Umgebung des Kraftfahrzeugs, virtuell darstellt und dabei nicht oder nur teilweise luft- und lichtdurchlässig ist, d.h. wenigstens weitgehend luft- und lichtundurchlässig ist. Vorteilhaft ist die erfindungsgemäße Anordnung mit einem virtuellen Panorama- bzw. Schiebedach ausgebildet, das ganzheitlich oder teilweise die äußere Umgebung aufnimmt und wiedergibt.

Bei dem virtuellen Panoramadach nehmen Sensoren am Dach des Kraftfahrzeugs oder an einer Dachbox des Kraftfahrzeugs, bevorzugt am Deckel der Dachbox des Kraftfahrzeugs, die Umgebung auf und übertragen diese Aufnahmen, insbesondere Bilder und andere Sensordaten bzw. -informationen, über Endgeräte, Hilfsmittel und/oder Applikationen ins Fahrzeuginnere, um einem Benutzer, d.h. einem Fahrzeuginsassen bzw. Fahrgast, ein freies, d.h. insbesondere nicht beengtes, Gefühl im Fahrzeug zu vermitteln, ihm zu ermöglichen, die Umgebung ganzheitlich wahrzunehmen und ihm viele weitere Möglichkeiten zu eröffnen. Sensoren, wie z.B. Kameras, an sich bekannter Bauformen ermöglichen dabei durch Miniaturisierung und Integrierbarkeit in Werkstoffe, z.B. Faserverbundwerkstoffe, eine sehr vielseitig anpassbare, flexible Gestaltung der erfindungsgemäßen Anordnung. Bekannt sind ferner leichte, hoch auflösende Bildwiedergabeeinrichtungen, d.h. Monitore, in Form millimeterdünner Folien, die in großen Massen günstig produziert werden können. Damit lassen sich auch dreidimensionale Bildinhalte in hoher Auflösung anzeigen.

Über die Funktion, Videosignale zu verarbeiten und in das Fahrzeuginnere zu projizieren, hinaus dient die erfindungsgemäße Anordnung dazu, dem Benutzer ein ganzheitliches Empfinden der Außenwelt zu ermöglichen und/oder die Außenwelt seinen Bedürfnissen anzupassen. Bevorzugt ist die erfindungsgemäße Anordnung an einen Fahrzeug-Bordcomputer anschließbar. Durch eine Installation von bzw. eine Verbindung mit weiteren Endgeräten ist es bei Bedarf möglich, die Außenwelt über eine reine Bildwiedergabe hinaus realistisch wiederzugeben und zu verändern. Bevorzugt können z.B. Außengeräusche mit Außenmikrofonen über ein Fahrzeug-Lautsprechersystem, auch als Fahrzeugsoundsystem bezeichnet, im Fahrzeuginneren wiedergegeben werden. Wind kann über Drucksensoren ermittelt und ungefiltert oder gefiltert von Gerüchen, Pollen, Feinstaub und Ozon über Lüftungen am Fahrzeugdach zugeführt, z.B. ins Haar geleitet, werden. Die Luftkanäle können über eine Klimaanlage bzw. eine sogenannte Klimaautomatik des Kraftfahrzeugs mit Luft gespeist und/oder gesteuert werden. Bevorzugt kann insbesondere bei einem Pkw die Luft über eine A- und/oder B-Säule zugeführt werden. Weiter bevorzugt können Licht- und/oder Wärmesensoren vorgesehen sein, die z.B. zum Ermitteln von Lichtintensitäten in der Umgebung, insbesondere Infrarotwerten, eingerichtet sind und durch die bevorzugt am Fahrzeughimmel angeordnete Infrarotlampen zum Abgeben von Infrarotlicht steuerbar sind. Ferner vorteilhaft können Geruchssensoren vorgesehen sein zum Ermitteln beliebter Gerüche, und es können Geruchsspender, bevorzugt natürliche Geruchsspender, zum Wiedergeben bzw. Zumischen dieser Gerüche vorgesehen sein. Dabei kann das virtuelle Panoramadach den Wünschen des Benutzers anpassbar gestaltet sein, wodurch der Benutzer eine innere Windstärke im Fahrgastraum des Kraftfahrzeugs nach Belieben anpassen, Bräunungsstufen regeln, Gerüche ein- und ausschalten, den Himmel erhellen oder verdunkeln, gewünschte Geräusche, z.B. Vogelzwitschern, verstärken, ungewünschte Geräusche, z.B. Straßenlärm, dämpfen oder ausblenden kann. Auch völlig andere Darstellungen der Außenwelt können vorgesehen sein, z.B. Sonnenschein oder ein Sternenhimmel an einem wolkenbehangenen Tag. Elektrische Energie für diese Darstellungen kann dabei in einer bevorzugten Weiterbildung der Erfindung durch Solarzellen erzeugt werden, die bevorzugt auf dem Dach des Kraftfahrzeugs oder einem Deckel einer auf dem Dach des Kraftfahrzeugs integrierbaren bzw. integrierten Dachbox angeordnet sind.

In der gleichen Weise, wie es durch die Erfindung dem Benutzer innerhalb des Kraftfahrzeugs ermöglicht wird, die Außenwelt des Kraftfahrzeugs über das virtuelle Panoramadach wahrzunehmen, ist nach einer bevorzugten Weiterbildung der erfindungsgemäßen Anordnung auch vorgesehen, auch umgekehrt den Benutzer für die Außenwelt des Kraftfahrzeugs wahrnehmbar zu machen. Insbesondere Lautsprecher, aber auch Bildwiedergabeeinrichtungen, an einer Außenseite des Fahrzeugs oder an einer Dachbox der vorgenannten Art können der Außenwelt nach Bedarf aufgenommene Töne oder Bilder aus dem Fahrzeuginneren weitergeben.

Vorteilhafte Ausgestaltungen der Erfindung sind in den Unteransprüchen gekennzeichnet.

Eine bevorzugte Weiterbildung der erfindungsgemäßen Anordnung ist dadurch gekennzeichnet, dass die virtuelle Darstellung, insbesondere die virtuelle bildliche Darstellung, der von der wenigstens einen Sensoreinrichtung aufgenommenen Umgebung, den Bedürfnissen eines Benutzers anpassbar ist, insbesondere, dass dazu die wenigstens eine Sensoreinrichtung, insbesondere Bildaufnahmeeinrichtung, und/oder die wenigstens eine Wiedergabeeinrichtung, insbesondere Bildwiedergabeeinrichtung, einstellbar, insbesondere durch den Benutzer einstellbar, ausgebildet ist/sind. Bevorzugt ist das erfindungsgemäße virtuelle Panorama- bzw. Schiebedach dadurch gekennzeichnet das sich die virtuelle Umgebung auf die Bedürfnisse des Benutzers anpassen lässt.

Eine bevorzugte Weiterbildung der erfindungsgemäßen Anordnung ist dadurch gekennzeichnet, dass die wenigstens eine Wiedergabeeinrichtung, insbesondere Bildwiedergabeeinrichtung, wenigstens an einem die Innenfläche des Daches bildenden Dachhimmel sich wenigstens nahezu entlang des gesamten Dachhimmels, insbesondere wenigstens nahezu bis zur Windschutzscheibe, d.h. Frontscheibe, des Kraftfahrzeugs und/oder wenigstens über einen Teilbereich wenigstens der Windschutzscheibe sich erstreckend angeordnet ist. Das virtuelle Panorama- bzw. Schiebedach erstreckt sich somit bevorzugt wenigstens bis zur Windschutzscheibe und bedeckt den gesamten Dachhimmel oder große Teile davon. Besonders bevorzugt erstreckt sich das virtuelle Panorama- bzw. Schiebedach, d.h. die dieses bildende Wiedergabeeinrichtung, insbesondere Bildwiedergabeeinrichtung, ferner auch über wenigstens einen Teilbereich, insbesondere einen oberen Teilbereich, wenigstens der Windschutzscheibe, vorteilhaft aber auch wenigstens über Teilbereiche von Seiten- und/oder Heckscheiben.

Eine weitere bevorzugte Ausgestaltung der erfindungsgemäßen Anordnung ist dadurch gekennzeichnet, dass wenigstens ein oberer Bereich wenigstens der Windschutzscheibe an deren Innen- und/oder Außenfläche mit wenigstens einer Wiedergabeeinrichtung, insbesondere Bildwiedergabeeinrichtung, ausgebildet ist zum
- wahlweisen Wiedergeben einer virtuellen Darstellung wenigstens eines Ausschnitts der Umgebung, insbesondere einer vorderen und/oder rückwärtigen Umgebung, bevorzugt zum Innenraum des Kraftfahrzeugs hin, und/oder
- wahlweisen Wiedergeben einer virtuellen Darstellung wenigstens eines Teilbereichs des Innenraums, insbesondere eines Fahrers des Kraftfahrzeugs, zum Innenraum und/oder zur Umgebung des Kraftfahrzeugs hin und/oder
- wahlweisen Wiedergeben wenigstens einer virtuellen Darstellung wenigstens einer Information, insbesondere eines Fahrzeug-Anzeigeinstruments, bevorzugt einer Navigationsanzeige oder wenigstens eines Fahrzeug-Betriebszustands, bevorzugt zum Innenraum des Kraftfahrzeugs hin, und/oder
- wahlweisen Wiedergeben wenigstens einer virtuellen Darstellung wenigstens einer Information bevorzugt zur Umgebung des Kraftfahrzeugs hin, insbesondere zur Darstellung einer Vignette, einer Fahrschul-, Taxi-, Parkberechtigungs-, Umweltplaketten- und/oder Werbeanzeige, und/oder
- wahlweisen wenigstens teilweisen Abblenden einer Durchsichtigkeit des wenigstens oberen Bereichs wenigstens der Windschutzscheibe zum Bilden einer Licht-, insbesondere Sonnenblende,
   wobei zum Steuern der vorstehenden Wiedergaben wenigstens ein Sensorsignal von wenigstens einem Sensor, insbesondere
- wenigstens einem Sensor zum Erfassen einer Einfallsrichtung des Sonnenlichts und/oder
- wenigstens einem Sensor zum Erfassen einer Bewegung und/oder Geste und/oder Blickrichtung wenigstens eines Nutzers des Kraftfahrzeugs, insbesondere des Fahrers,
   insbesondere wenigstens in der Weise herangezogen wird,
- dass das wenigstens teilweise Abblenden der Durchsichtigkeit des wenigstens oberen Bereichs wenigstens der Windschutzscheibe zum Bilden der Licht-, insbesondere Sonnenblende, abhängig von der Einfallsrichtung des Sonnenlichts vorgenommen ist und/oder
- dass das wahlweise Wiedergeben der virtuellen Darstellung des wenigstens einen Ausschnitts der Umgebung, insbesondere der vorderen und/oder rückwärtigen Umgebung, und/oder des wenigstens einen Teilbereichs des Innenraums, bevorzugt zum Innenraum des Kraftfahrzeugs hin, in Abhängigkeit von der Bewegung und/oder Geste und/oder Blickrichtung des wenigstens einen Nutzers des Kraftfahrzeugs, insbesondere des Fahrers, vorgenommen ist.

Bevorzugt die Windschutzscheibe, aber auch wenigstens eine andere Fensterscheibe des Kraftfahrzeugs, kann so vorteilhaft mit einer Kombination einer Sonnenblende mit einer vielfältig nutzbaren Wiedergabeeinrichtung, insbesondere Bildwiedergabeeinrichtung, ausgebildet sein. Dabei ist die betreffende Fensterscheibe, insbesondere Windschutzscheibe, als durchsichtige Wiedergabeeinrichtung, insbesondere Bildwiedergabeeinrichtung, ausgebildet, die nach Bedarf in einen undurchsichtigen Betriebszustand gesteuert werden kann, z.B. in einer Ausgestaltung als LCD-Anzeige oder dergleichen. Dabei sind auch stufenlose Abtönungen möglich wie bei einer Sonnenbrille. Die Wiedergabeeinrichtung, insbesondere Bildwiedergabeeinrichtung, ist vorteilhaft nutzbar zum Anzeigen unterschiedlicher Fahrzeuganzeigen wie Instrumente, Navigationsbildschirm und dergleichen, insbesondere in der Art eines Frontscheibenprojektors (sogenanntes "Head-Up-Display"). Außerdem kann insbesondere im fahrerseitigen Bereich der Windschutzscheibe ein von einer Rückfahrkamera oder einem vergleichbaren Sensor geliefertes Bild eingeblendet werden, so dass dieser Bereich der Wiedergabeeinrichtung, insbesondere Bildwiedergabeeinrichtung, der räumlich über die Erstreckung eines Schiebe- und/oder Panoramadaches im herkömmlichen Sinn hinausgeht, als virtueller Rückspiegel einsetzbar ist. Die Erstreckung des Bildes der Rückfahrkamera, d.h. Bildausschnitt und/oder Bildgröße der Ansicht, die der virtuelle Rückspiegel darstellt, kann einstellbar sein. Bevorzugt sind Bildausschnitt und/oder Bildgröße über Sensoren steuerbar, die eine Bewegung und/oder Geste, bevorzugt eine Kopfbewegung, Kopfposition oder Blickrichtung der Augen, erfassen. So kann die Rückspiegelansicht z.B. aktiviert werden, wenn der Fahrer den Kopf dreht oder in eine Richtung blickt, die als Blick in einen - realen - Rückspiegel gedeutet wird, oder die Wiedergabefläche für die Rückspiegelansicht kann dadurch gesteuert - insbesondere vergrößert, besonders bevorzugt zu einer über die Breite der Windschutzscheibe wenigstens weitgehend durchgehend sich erstreckenden Ansicht erweitert - werden, d.h. beim Blick und/oder Kopfwenden des Fahrers in eine Richtung, in der sich herkömmlich der Rückspiegel befindet, wird auf der Wiedergabeeinrichtung, insbesondere Bildwiedergabeeinrichtung, die Rückspiegelansicht zu einer durchgehenden und/oder großflächigen Bildleiste aufgeblendet. Sobald also der Fahrer "in den Rückspiegel schaut", wird der Spiegel, d.h. die wiedergegebene Rückspiegelansicht, größer. Dabei ist dann auch eine Panoramaansicht insbesondere der rückwärtigen Umgebung des Kraftfahrzeugs möglich, womit eine wirksame Überwachung toter Winkel erzielbar ist.

Insbesondere die Windschutzscheibe kann insbesondere bei aktivierter Sonnenblendenfunktion, d.h. bei Abtönung oder Abdunkelung, zum Wiedergeben auch von virtuellen Darstellungen auch der vorderen Umgebung des Kraftfahrzeugs dienen, z.B. können Ampelanzeigen aufgenommen und eingeblendet werden, die bei heruntergeklappten herkömmlichen Sonnenblenden durch den Fahrer regelmäßig nur umständlich erkennbar sind.

Die Sonnenblendenfunktion kann ebenfalls außer durch wenigstens einen der Nutzer des Kraftfahrzeugs auch automatisch gesteuert werden, bevorzugt durch Lichtsensoren, die wenigstens eine Einfallsrichtung des Lichts, insbesondere der Sonneneinstrahlung, und/oder eine Lichtintensität detektieren und demgemäß die Sonnenblendenfunktion steuern, d.h. Stärke der Lichtdämpfung und räumliche Ausdehnung derjenigen Bereiche wenigstens der Windschutzscheibe, die getönt bzw. abgedunkelt werden sollen. Bei tiefer Sonneneinstrahlung wird also das virtuelle Schiebedach wenigstens auf obere Bereiche wenigstens der Windschutzscheibe erstreckt. Dies ist nach Bedarf ebenso für Seiten- und/oder Heckscheiben möglich. Liegt keine Sonneneinstrahlung vor, werden die Scheiben wieder in herkömmlicher Weise durchsichtig.

Insbesondere der sich auf die Windschutzscheibe erstreckende Bereich der Wiedergabeeinrichtung, insbesondere Bildwiedergabeeinrichtung, kann auch mit einem Sensor, insbesondere Bildaufnehmer, zum Erfassen eines Bildes eines Beifahrers und Wiedergabe über die Windschutzscheibe ausgestattet sein. Ein solches Bild kann auch bei nicht aktivierter Abtönung der Windschutzscheibe z.B. vor einem flächig begrenzt dunklen Hintergrund wiedergegeben werden. Entsprechende Einrichtungen sind auch für die übrigen Nutzer des Kraftfahrzeugs möglich.

Vorzugsweise im Bereich der Windschutzscheibe, aber auch über weitere Scheiben des Kraftfahrzeugs sich erstreckend, können weitere Anzeigen sowohl auf Innenflächen als auch Außenflächen der Scheiben dargestellt werden. Insbesondere kann eine Innenansicht des Kraftfahrzeugs, bevorzugt des Fahrers, besonders bevorzugt des Gesichts des Fahrers, auf einem Bereich der Außenfläche der Windschutzscheibe dargestellt werden, und umgekehrt kann zugleich auch ein Bild der vorderen Umgebung des Kraftfahrzeugs oder ein Bildausschnitt dieser vorderen Umgebung auf einem Bereich der Innenfläche der Windschutzscheibe wiedergegeben werden. Auf diese Weise ist es auch bei aktiver Sonnenblendenfunktion, d.h. abgetönter oder abgedunkelter Windschutzscheibe, möglich, einen Blickkontakt zwischen insbesondere dem Fahrer des Kraftfahrzeugs und anderen Verkehrsteilnehmers herzustellen.

Insbesondere die Außenflächen, bevorzugt die Außenfläche der Windschutzscheibe, kann auch zum Wiedergeben vielfältiger weiterer Anzeigen und Darstellungen genutzt werden. So können z.B. Vignetten, Abgas- bzw. Umweltplaketten, Fahrschulkennungen, Taxischilder, Parkbillets oder Parkscheiben, Werbung oder vergleichbare Information wie z.B. eine Verkaufsanzeige für das Fahrzeug, Firmenaufschriften usw., eine Kennung für einen Mitfahrerdienst oder personalisierte Informationen jeglicher Art virtuell wiedergegeben werden. Diese Anzeigen können bevorzugt auch über eine mobile Dateneinheit, z.B. ein Mobiltelefon, steuerbar sein, wenn z.B. darüber ein Parkschein gebucht oder eine Mitfahrgelegenheit organisiert wird. Bezüglich einer Anwendung für ein Anbieten einer Mitfahrgelegenheit bzw. hier einer Transportgelegenheit für Transportgut wird auf die internationale Patentanmeldung mit der Veröffentlichungsnummer WO 2014/147082 ausdrücklich verwiesen. Verallgemeinert lassen sich so die verschiedensten im Kraftfahrzeug verfügbaren Informationen auch für Dritte, d.h. Personen in der Umgebung, nutzbar machen. Vorteilhaft gilt dies für Informationen über eine Umgebung oberhalb des Kraftfahrzeugs, z.B. über Vorgänge am Himmel wie Wetterbedingungen, aber auch Bauwerke wie Brücken, Tunnels usw.

Wie noch nachfolgend beschrieben, kann im Innenraum des Kraftfahrzeugs die Wiedergabeeinrichtung, insbesondere Bildwiedergabeeinrichtung auch in dem sich auf die Windschutzscheibe erstreckenden Bereich mit einer Berührbildschirmfunktion ausgebildet sein, über die verschiedenste Funktionen von den Nutzern steuerbar sind. Eine solche Berührbildschirmfunktion kann sich über die gesamte Ausdehnung des virtuellen Panorama- und/oder Schiebedachs erstrecken, so dass vielfältigste Bedienvorgänge von jedem Platz jedes der Nutzer möglich sind, d.h. auch von rückwärtigen Sitzplätzen im Kraftfahrzeug.

Die unterschiedlichsten Anzeigen der Wiedergabeeinrichtung, insbesondere Bildwiedergabeeinrichtung, können in unterschiedlichster Darstellung je nach Inhalt und Zweck ausgebildet sein, z.B. fotorealistisch, symbolartig wie z.B. durch sogenannte "Icons" oder auf andere Weise.

Eine bevorzugte Weiterbildung der erfindungsgemäßen Anordnung ist dadurch gekennzeichnet, dass die wenigstens eine Wiedergabeeinrichtung, insbesondere Bildwiedergabeeinrichtung, wenigstens teilweise mit einem Berührbildschirm ausgebildet ist, bevorzugt, dass über diesen Berührbildschirm die Wiedergabe der virtuellen Darstellung der Umgebung steuerbar ist, besonders bevorzugt ferner weitere Einrichtungen des Kraftfahrzeugs, insbesondere Einrichtungen eines Innenraums des Kraftfahrzeugs, besonders vorteilhaft Lichtstrahler, Leselampen und/oder Sonnenblenden, steuerbar und/oder bedienbar und/oder einstellbar sind. Vorteilhaft ist somit eine Berührbildschirmfunktion - sogenannte "Touchscreenfunktion" - in der bevorzugt mit einem Monitor und/oder einem Display ausgebildeten Bildwiedergabeeinrichtung integriert, über die sich u.a. die Lichtstrahler, Leselampen und Sonnenblenden bedienen lassen.

Unter dem Begriff des virtuellen Panorama- bzw. Schiebedach ist somit über ein einzelnes Element oder über eine einfache Kombination eines Monitors am Dachhimmel mit einer Recheneinheit hinaus ein Zusammenschluss einer Mehrzahl von Sensoren und Endgeräten zur gesamtheitlichen Darstellung der Außenwelt, die mit sämtlichen menschlichen Sinnen erfasst werden kann. Demgemäß hat das virtuelle Panorama- bzw. Schiebedach mehrere Bestandteile, die miteinander zusammenwirken. Das virtuelle Panorama- bzw. Schiebedach kann sich auch über das Gesamte Fahrzeugdach bis zur Windschutzscheibe erstrecken und diese wie vorteilhaft auch Seiten- und/oder Heckscheiben wenigstens teilweise mit umfassen, wie vorstehend erläutert ist. Die üblichen Lichtstrahler / Leselampen und Sonnenblenden können dann über eine sogenannte Touchscreenfunktion im Monitor bzw. Display bedient werden. An Stelle umklappbarer Sonnenblenden können wahlweise verfahrbare Sonnenblenden oder die vorstehend beschriebene Sonnenblendenfunktion der Windschutzscheibe eingesetzt werden.

Eine bevorzugte Weiterbildung der erfindungsgemäßen Anordnung ist dadurch gekennzeichnet, dass die wenigstens eine Wiedergabeeinrichtung, insbesondere Bildwiedergabeeinrichtung, wenigstens zwei Teilwiedergabeeinrichtungen umfasst, von denen wenigstens eine vordere wenigstens überwiegend in einem vorderen Bereich des Daches und wenigstens eine hintere wenigstens überwiegend in einem hinteren Bereich des Daches angeordnet ist, und dass bevorzugt eine räumliche Position wenigstens einer der Teilwiedergabeeinrichtungen, bevorzugt der wenigstens einen hinteren Teilwiedergabeeinrichtung einstellbar und oder steuerbar ist, insbesondere, dass die wenigstens eine der Teilwiedergabeeinrichtungen, bevorzugt wenigstens eine der wenigstens einen hinteren Teilwiedergabeeinrichtung, klappbar und/oder drehbar, besonders bevorzugt herunterklappbar, ausgebildet ist. In dieser bevorzugten Ausführungsform der Erfindung ist der als visueller Bestandteil des virtuellen Schiebedaches bezeichnete Monitor geteilt. Der hintere Teil bzw. wenigstens einer der hinteren Teile, wahlweise aber auch wenigstens einer der vorderen Teile, kann dabei heruntergeklappt werden, sodass die Passagiere im Fond und wahlweise auch vorn, insbesondere auf dem Beifahrersitz, statt aus dem Schiebedach zu schauen auch auf großer Fläche z.B. Filme schauen oder Computerspiele spielen können. Sind die Teilwiedergabeeinrichtungen, insbesondere klappbaren Teilwiedergabeeinrichtungen, als Berührbildschirme ausgebildet, können vorteilhaft darauf auch Zeichnungen - z.B. als Zeitvertreib für mitfahrende Kinder - angefertigt werden; z.B. kann am Dachhimmel gemalt werden, ggf. in Kombination mit einer bildlichen Darstellung der Umgebung. Insbesondere, aber nicht ausschließlich, in einem für sogenanntes autarkes Fahren eingerichteten Kraftfahrzeug, d.h. einem Kraftfahrzeug mit einer automatischen Fahrsteuerung, insbesondere einer Spursteuerung und/oder Abstandssteuerung und/oder Geschwindigkeitssteuerung und/oder Routensteuerung, die ein fahrerloses Fahren des Kraftfahrzeugs ermöglichen, ist diese Möglichkeit auch für Passagiere im Frontbereich interessant, d.h. kann wahlweise ebenfalls die wenigstens eine vordere Teilwiedergabeeinrichtung klappbar und/oder drehbar, besonders bevorzugt herunterklappbar, ausgebildet sein, jedoch kann diese Ausgestaltung der wenigstens einen vorderen Teilwiedergabeeinrichtung auch in einem konventionell gesteuerten Kraftfahrzeug wenigstens für wenigstens einen Beifahrerplatz vorgesehen sein, ferner kann sie auch als Ausstattung eines Fahrerplatzes des Kraftfahrzeugs vorgesehen und dort insbesondere im Stillstand des Kraftfahrzeugs nutzbar sein.

Anstelle der vorbeschriebenen Wiedergabeeinrichtung, insbesondere Bildwiedergabeeinrichtung, in der Form eines Bildschirms oder parallel dazu kann die Wiedergabeeinrichtung wahlweise auch mit einer ein Hologramm erzeugenden Einrichtung ausgebildet sein. Damit ist es einem Nutzer möglich, ein wiederzugebendes Bild aus unterschiedlichen Ansichten zu betrachten. Auch könnte sich jeder Nutzer das wiederzugebende Bild nach seinen Wünschen gesondert einstellen. Ferner kann - bevorzugt auf der Grundlage einer Hologramm-Darstellung - jeder Nutzer das dargestellte Bild in einer für ihn individuellen Ausleuchtung wiedergeben lassen; z.B. mehr in einem Rotton oder einem Blauton, heller oder dunkler, und damit die Darstellung seinen jeweiligen Wünschen oder Stimmungen anpassen.

Eine Anordnung für ein Dach eines Kraftfahrzeugs mit einer Dachbox, insbesondere einer faltbaren und/oder integrierbaren Dachbox, die ein Bodenelement bzw. ein Wannenelement, d.h. wannenartiges Bodenelement, aufweist, ist dadurch gekennzeichnet, dass das Bodenelement bzw. Wannenelement wenigstens eine Vertiefung zwischen Quersäulen des Daches aufweist.

Eine bevorzugte Weiterbildung der vorstehenden, bevorzugten Anordnung für ein Dach eines Kraftfahrzeugs mit einer Dachbox mit einem Bodenelement bzw. einem Wannenelement ist dadurch gekennzeichnet, dass das Bodenelement bzw. Wannenelement mit wenigstens einem Dämpfungselement, insbesondere wenigstens einer Dämpfungsmatte (21), ausgebildet ist, das sowohl einen Schallschutz als auch eine Dämpfung für in der Dachbox zu lagernde Gegenstände bildet, wobei bevorzugt das wenigstens eine Dämpfungselement, insbesondere die wenigstens eine Dämpfungsmatte (21), in der wenigstens einen Vertiefung angeordnet ist. Das Bodenelement bzw. Wannenelement der Dachbox, insbesondere der faltbaren und/oder integrierbaren Dachbox, d.h. Fahrzeugdachbox, verfügt also über eine oder mehrere Dämpfungsmatten, die sowohl als Schallschutz als auch als Dämpfung für Gegenstände in der Dachbox dienen.

Eine andere Ausführungsform der erfindungsgemäßen Anordnung für ein Dach eines Kraftfahrzeugs mit einer Dachbox ist dadurch gekennzeichnet, dass die wenigstens eine Wiedergabeeinrichtung, insbesondere Bildwiedergabeeinrichtung, an der Innenfläche des Daches, insbesondere in der Position des Schiebe- und/oder Panoramadaches, wenigstens teilweise im Bereich unterhalb der wenigstens einen Vertiefung des Bodenelements bzw. Wannenelements angeordnet ist.

Durch leichte, millimeterdünne Monitore kann Gewicht am Fahrzeug bzw. Fahrzeugdach eingespart und neuer Raum unterm Dach zurückgewonnen werden. Dieser Raum kann anderweitig genutzt werden, z.B. für ein vertieftes Bodenelement einer faltbaren Dachbox der vorbeschriebenen Art. Die Schalldämpfung, die üblicherweise am Dachhimmel angebracht wird, kann dann anders angebracht werden und damit zusätzliche Funktion übernehmen. Statt Die Dämpfung ist wenigstens teilweise statt an den Dachhimmel angeheftet nun in einer Weiterbildung der Erfindung in das Boden- bzw. Wannenelement der integrierten und/oder faltbaren Dachbox eingelegt. Dadurch kann die Dämpfung zugleich als Schalldämpfung von Außengeräuschen und als Dämpfung und Puffer für in der Dachbox gelagerte Gegenstände genutzt werden. Außer der zusätzlichen Funktion der Dämpfung ermöglicht diese Weiterbildung der Erfindung Gewichts- und Platzeinsparungen am Fahrzeugdach. Das Bodenelement der integrierten und/oder faltbaren Dachbox ist dabei so geformt, dass es zwischen den Quersäulen des Daches, d.h. insbesondere den A-, B-, C- Säulen, Vertiefungen aufweist und dadurch eine oder mehrere Wannen formt. Diese Vertiefungen bzw. Wannen können bei sogenannten Kombifahrzeugen z.B. im hinteren Bereich des Fahrzeugdaches, insbesondere über einem Gepäckraum, tiefer ausgebildet sein als im vorderen Bereich des Daches, insbesondere über einem Fahrgastraum, da dort oftmals mehr ungenutzter Platz nach unten besteht als im vorderen Bereich. In den Vertiefungen können Gegenstände, die im Zusammenhang mit dem Gebrauch der Dachbox stehen, gelagert werden, z.B. passende Taschen, ein Falthocker für eine bessere Zugänglichkeit zur Dachbox, Faltboxen zum Einkauf, Hilfsmittel für eine Arretierung von Gegenständen, wie Spanngurte oder Skihalterungen.

Das erfindungsgemäß ausgebildete Kraftfahrzeug ist mit einer Dachbox gestaltet. Die Dachbox kann fest integriert oder nachrüstbar sein. Dabei können Sensoren sowohl bei einem Kraftfahrzeug mit nachgerüsteter bzw. abnehmbarer als auch mit fest integrierter Dachbox auf dem Dach des Kraftfahrzeugs angeordnet sein. Außerdem werden Sensoren auf der Dachbox angeordnet. Ist ein Kraftfahrzeug mit Sensoren sowohl auf der Dachbox als auch auf dem Kraftfahrzeugdach ausgestattet, also z.B. bei nachgerüsteter Dachbox, kann bevorzugt die Dachbox mit einem durchsichtigen Boden versehen sein. Dadurch ist es möglich, dass über die Sensoren auf dem Kraftfahrzeugdach der Inhalt der Dachbox aufgenommen wird, wozu auch Balkencodes gelesen werden können. Zur Ausgestaltung der Dachbox an sich ist ausdrücklich verwiesen auf die internationale Patentanmeldung mit der Veröffentlichungsnummer WO 2013/011041.

Wenigstens einer der Sensoren auf dem Dach des Kraftfahrzeugs, insbesondere auf der Dachbox, kann als Höhensensor ausgebildet sein zum Detektieren einer Durchfahrtshöhe auf einer durchfahrenen Strecke, insbesondere einer Durchfahrtshöhe unter Brücken, in Tunnels, unter Bäumen, Verkehrszeichenbrücken oder dergleichen. Insbesondere bei einer Vergrößerung der Fahrzeughöhe durch eine Dachbox kann so der Fahrer über eine Anzeige, einen Warnton oder dergleichen gewarnt und können Schäden am Kraftfahrzeug vermieden werden. Vorteilhaft kann ein solcher Höhensensor in eine Fahrzeug-Rundfunkantenne auf dem Dach, insbesondere auf der Dachbox, integriert sein.

Die Erfindung schafft ein virtuelles Panorama- bzw. Schiebedach für ein Kraftfahrzeug, das die Außenwelt realistisch wiedergibt oder diese anpassen kann. Es bietet viele Vorteile, wie z.B. eine Reduzierung von Fahrgeräuschen und eine Verringerung des Kraftstoffverbrauchs des Kraftfahrzeugs gegenüber herkömmlichen Schiebedächern.

Die Erfindung ermöglicht somit auf vorteilhafte Weise ein virtuelles Panorama- bzw. Schiebedach für ein Kraftfahrzeug, insbesondere für einen Pkw, mit integrierter und/oder faltbarer Dachbox, das flexibel und vielseitig ausstattbar und einsetzbar ist und eine beträchtliche Steigerung des Fahrkomforts des Kraftfahrzeugs bietet.

### Kurze Beschreibung der Zeichnungen

Ausführungsbeispiele und bevorzugte Ausführungsformen der Erfindung sind in der Zeichnung dargestellt und werden im nachfolgenden unter Bezug auf diese Zeichnung näher beschrieben, wobei weitere vorteilhafte Einzelheiten den Figuren der Zeichnung zu entnehmen und funktionsgleiche, insbesondere übereinstimmende, Elemente in allen Figuren mit denselben Bezugszeichen versehen sind sowie eine wiederholte Beschreibung dieser Elemente weggelassen wird. Es zeigen schematisch:
- Figur 1: eine perspektivische Darstellung des Fahrzeugdaches, ausgestattet mit mehreren, vorzugsweise verschiedenartigen, Sensoren in einer Vorderansicht von schräg oben,
- Figur 2: eine perspektivische Darstellung einer Dachbox, insbesondere einer integrierten, faltbaren Dachbox, ausgebildet mit mehreren, vorzugsweise verschiedenartigen, Sensoren, in einer Vorderansicht von schräg oben,
- Figur 3: eine perspektivische Darstellung vom Fahrzeuginnenraum mit Blick auf den Dachhimmel mit virtuellem Panorama- bzw. Schiebedach von einer in Fahrtrichtung rechten Seite des Fahrzeugs,
- Figur 4: eine perspektivische Darstellung vom Fahrzeuginnenraum mit Blick auf den Dachhimmel mit virtuellem Panorama- bzw. Schiebedach von der in Fahrtrichtung rechten Seite des Fahrzeugs, der hintere Teil des Monitors ist dabei heruntergeklappt,
- Figur 5: eine perspektivische Darstellung vom Fahrzeuginnenraum mit Blick auf den Dachhimmel mit virtuellem Panorama- bzw. Schiebedach von der in Fahrtrichtung rechten Seite des Fahrzeugs aus, wobei das virtuelle Panorama- bzw. Schiebedach bis zur Windschutzscheibe verläuft,
- Figur 6: eine perspektivische Darstellung einer Fahrzeugkarosse mit einem Vertiefungen zwischen den Quersäulen aufweisenden Bodenelement einer faltbaren Dachbox,
- Figur 7: eine schematische Darstellung zum Signalaustausch,
- Figur 8: eine Darstellung einer Dachbox mit einem Ausführungsbeispiel für eine Anbringung wenigstens eines Mikrofons und wenigstens eines Lautsprechers,
- Figur 9: eine perspektivische Darstellung eines weiteren Ausführungsbeispiels eines Fahrzeugdaches, ausgestattet mit einer Windschutzscheibe, die in einem oberen, an das Fahrzeugdach angrenzenden Bereich, vorzugsweise an deren Innen- und/oder Außenfläche, mit wenigstens einer Wiedergabeeinrichtung, insbesondere Bildwiedergabeeinrichtung, ausgebildet ist, in einer weiteren Vorderansicht von schräg oben außen,
- Figur 10: eine perspektivische Darstellung des Fahrzeuginnenraums des Ausführungsbeispiels nach Figur 9 mit Blick in Fahrtrichtung auf die Armaturentafel und die mit wenigstens einer Wiedergabeeinrichtung, insbesondere Bildwiedergabeeinrichtung, ausgebildete Windschutzscheibe, und
- Figur 11: eine perspektivische Darstellung eines Ausführungsbeispiels für eine erfindungsgemäß mit einem Höhensensor ausgestattete Dachbox für ein Kraftfahrzeug gemäß einem der vorstehenden Ausführungsbeispiele.

### Bevorzugte Ausführungsform der Erfindung

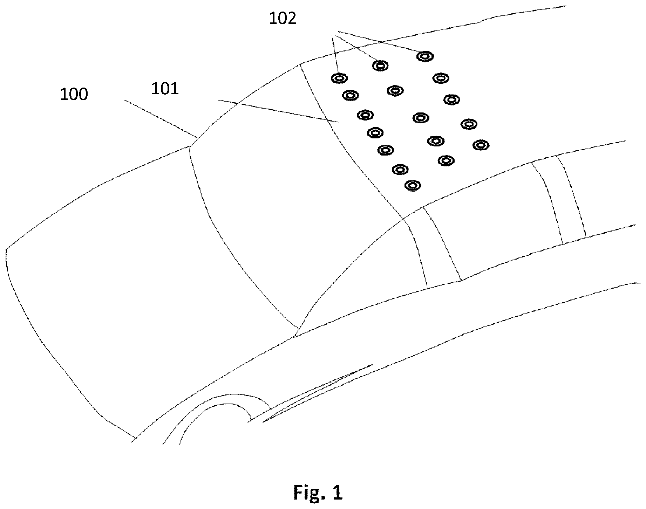

Figur 1 zeigt eine perspektivische Darstellung eines Kraftfahrzeugs 100, bevorzugt eines Pkw, mit einem Fahrzeugdach 101, das mit mehreren, vorzugsweise verschiedenartigen, Sensoren 102 ausgebildet ist. Beispielsweise sind hier die Sensoren 102 in drei Reihen quer zu einer Längsrichtung, d.h. Fahrtrichtung, des Kraftfahrzeugs 100 angeordnet. Bei den Sensoren 102 handelt es sich z.B. um Bildsensoren (d.h. Kameras), Mikrophone, Temperatursensoren, und andere.

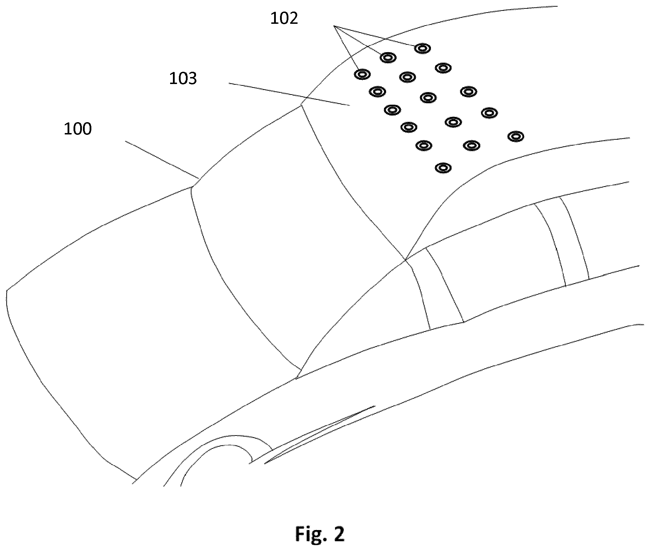

Figur 2 zeigt eine perspektivische Darstellung eines Kraftfahrzeugs 100, bevorzugt eines Pkw, mit einem Fahrzeugdach 101, auf dem eine Dachbox 103, insbesondere eine integrierte, faltbare Dachbox 103, angeordnet ist. Auf der Dachbox 103, insbesondere auf einem Deckel der Dachbox 103, sind die Sensoren 102 in derselben Weise angeordnet wie im Beispiel nach Figur 1 auf dem Fahrzeugdach 101.

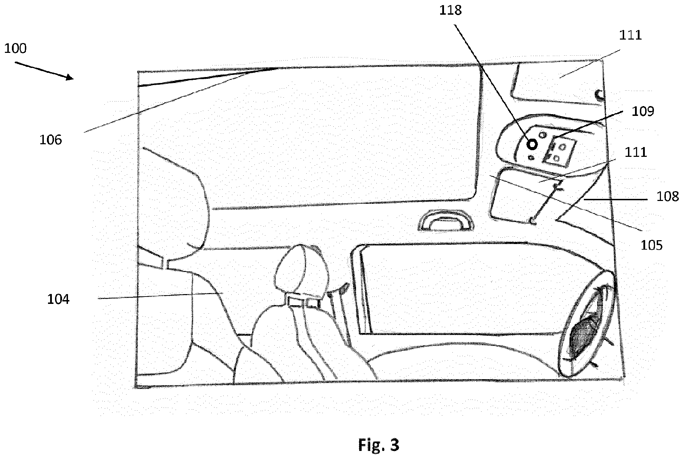

Figur 3 zeigt eine perspektivische Darstellung eines Fahrzeuginnenraums 104 des Kraftfahrzeugs 100 mit Blick auf einen Dachhimmel 105, mit dem eine Unter- bzw. Innenseite des Fahrzeugdaches 101 ausgekleidet ist. Unter dem Fahrzeugdach 101, d.h. in den Dachhimmel 105 eingefügt und den Dachhimmel 105 wenigstens teilweise bildend, ist ein virtuelles Panorama- bzw. Schiebedach 106 angeordnet. Das virtuelle Panorama- bzw. Schiebedach 106 erstreckt sich in der Anordnung nach Figur 3 über Vorder- und Rücksitze des Kraftfahrzeugs 100, hier eines Pkw. Dabei ist ein Bereich des Dachhimmels 105, der sich in Fahrtrichtung hinter einer Windschutzscheibe bzw. Frontscheibe 108 an diese anschließt, von der Erstreckung des virtuellen Panorama- bzw. Schiebedaches 106 ausgenommen. In diesem Bereich sind hier beispielhaft umklappbare Sonnenblenden 111 und weitere Bedienelemente 109 vorgesehen. Außerdem ist hier ein Gesichtserkennungssensor 118 beispielhaft angeordnet. Dieser dient zur Gesichtserkennung wenigstens eines der Nutzer des Kraftfahrzeugs 100, insbesondere des Fahrers oder eines Beifahrers und ist bevorzugt zum Erkennen einer Gesichtsbräunung, also eines Teints, der Nutzer, einer Gestik und/oder Mimik z.B. für eine Steuerung einer Rückspiegelfunktion wie vor- und nachstehend beschrieben, oder einer Stellung der Augenlider, z.B. für eine Einschlaferkennung bevorzugt des Fahrers, und zum Steuern einer daran angeknüpften Einschlafverhinderung, z.B. Weckfunktion, und/oder Fahrsteuerung, z.B. Geschwindigkeitssteuerung.

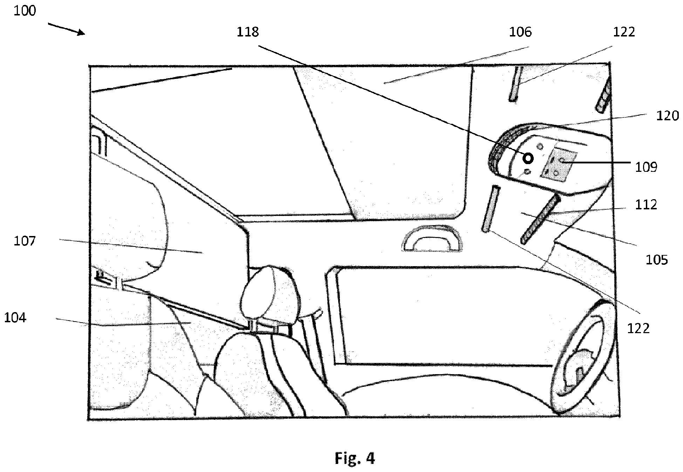

Figur 4 zeigt eine perspektivische Darstellung des Fahrzeuginnenraums 104 des Kraftfahrzeugs 100 in gleicher Blickrichtung wie in Figur 3 von der in Fahrtrichtung rechten Seite des Kraftfahrzeugs 100 auf den Dachhimmel 105 in einer Abwandlung des in Figur 3 gezeigten Ausführungsbeispiels. Darin ist das virtuelle Panorama- bzw. Schiebedach 106 in einen vorderen und einen hinteren Teil unterteilt; der hintere Teil 107 des virtuellen Panorama- bzw. Schiebedaches 106, einen Monitor bildend, ist dabei heruntergeklappt dargestellt. In dem Bereich des Dachhimmels 105, der sich in Fahrtrichtung hinter der Windschutzscheibe bzw. Frontscheibe 108 an diese anschließt und von der Erstreckung des virtuellen Panorama- bzw. Schiebedaches 106 ausgenommen ist, sind hier beispielhaft außer den weiteren Bedienelementen 109 verfahrbare Sonnenblenden 112 und Leselampen 122 vorgesehen. Vorteilhaft können an der Stelle der hier eingezeichneten Sonnenblenden 112 oder zusätzlich dazu Luftauslässe 112 vorgesehen sein, durch die dem Fahrzeuginnenraum 104 des Kraftfahrzeugs 100 Frischluft zuführbar ist, und an Stelle oder zusätzlich zu den Leselampen 122 können Bräunungslampen 122 vorgesehen sein, die insbesondere als Gesichtsbräuner für Fahrer und/oder Beifahrer dienen und bevorzugt durch den Gesichtserkennungssensor 118 steuerbar sind. Außerdem sind die weiteren Bedienelemente 109 in einer unter dem Dachhimmel 105 angebrachten Konsole zusammengefasst, in die noch Lautsprecher 120 eines sogenannten Fahrzeugsoundsystems aufgenommen sind.

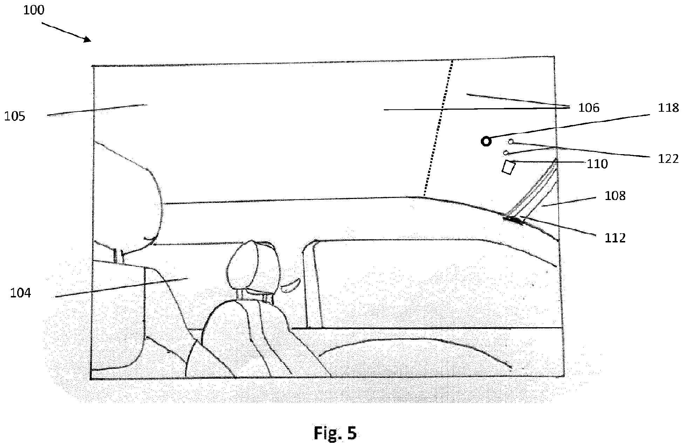

Figur 5 zeigt eine perspektivische Darstellung des Fahrzeuginnenraums 104 des Kraftfahrzeugs 100 in gleicher Blickrichtung wie in Figur 3 von der in Fahrtrichtung rechten Seite des Kraftfahrzeugs 100 auf den Dachhimmel 105 in einer weiteren Abwandlung des in Figur 3 gezeigten Ausführungsbeispiels. Darin erstreckt sich das virtuelle Panorama- bzw. Schiebedach 106 von hinten bis zur Windschutzscheibe 108, d.h. auch über den in den Figuren 3 und 4 bezeichneten Bereich des Dachhimmels 105, der sich in Fahrtrichtung hinter der Windschutzscheibe bzw. Frontscheibe 108 an diese anschließt, hinweg. In diesem Bereich, der insbesondere von Fahrzeuginsassen auf den Vordersitzen, bevorzugt einem Fahrer des Kraftfahrzeugs 100, gut erreichbar ist, ist das virtuelle Panorama- bzw. Schiebedach 106 mit einem hier beispielsweise in Fahrtrichtung des Kraftfahrzeugs 100 nach hinten durch eine als punktierte Linie symbolisierte Berandung begrenzten Bereich 110 ausgebildet, der eine sogenannte "Touchscreenfunktion" aufweist, d.h. als Berührbildschirm ausgebildet ist, über den verschiedenste Geräte, Anordnungen und Funktionen des Kraftfahrzeugs 100 steuerbar sein können. Wahlweise kann das virtuelle Panorama- bzw. Schiebedach auch wenigstens nahezu entlang seiner gesamten Erstreckung als Berührbildschirm ausgebildet sein. Beispielsweise sind Lichtstrahler und/oder Leselampen 122 und verfahrbare Sonnenblenden 112, die wenigstens teilweise an die Stelle der vorstehend beschriebenen umklappbaren Sonnenblenden 111 treten können, vorgesehen und über den Berührbildschirm 110 bedienbar. Durch diese Bauform der Sonnenblenden 112 und eine im wesentlichen punktförmige Gestaltung der Lichtstrahler und/oder Leselampen 122 wird der Bereich hinter der Windschutzscheibe 108 für den Berührbildschirm 110 freigehalten.

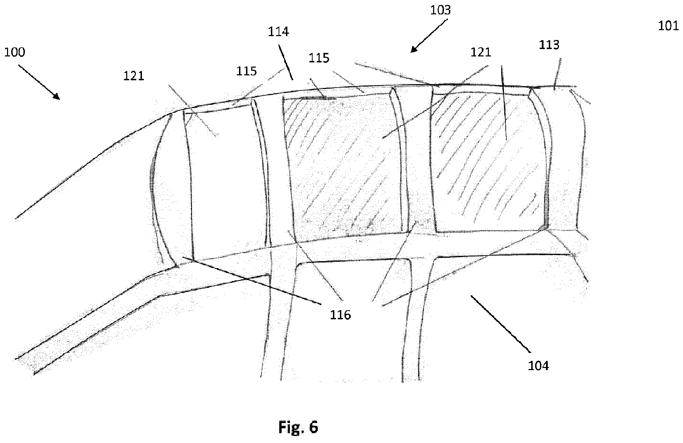

Figur 6 zeigt eine perspektivische Darstellung einer Fahrzeugkarosse 113 eines Kraftfahrzeugs 100, insbesondere eines Fahrzeugdaches 101 des Kraftfahrzeugs 100 bzw. der Fahrzeugkarosse 113. Dabei bildet das Fahrzeugdach 101 zugleich ein Bodenelement bzw. Wannenelement 114 einer in das Fahrzeugdach 101 integrierten und/oder faltbaren Dachbox 103, wie sie in Figur 2 angedeutet ist. Das Fahrzeugdach 101 ist mit Quersäulen 116 ausgebildet, hier insbesondere mit A-, B-, C- und D-Quersäulen 116. Zwischen je zwei benachbarten der Quersäulen 116 ist das Fahrzeugdach 101 mit Vertiefungen 115 ausgebildet, durch die ein Volumen der Dachbox 103 nach unten, d.h. zum Dachhimmel 105 bzw. zum Fahrzeuginnenraum 104 hin, erweitert ist. Damit ist der Platz, d.h. Stauraum, der Dachbox 103 noch besser nutzbar. Bevorzugt sind in den Vertiefungen 115 Dämpfungen 121, insbesondere mattenförmige Dämpfungen 121, angeordnet, d.h. in diese eingelegt. Diese Dämpfungen 121 dienen sowohl als Schallschutz als auch als Dämpfung bzw. Stoßschutz für in der Dachbox mitgeführte Gegenstände.

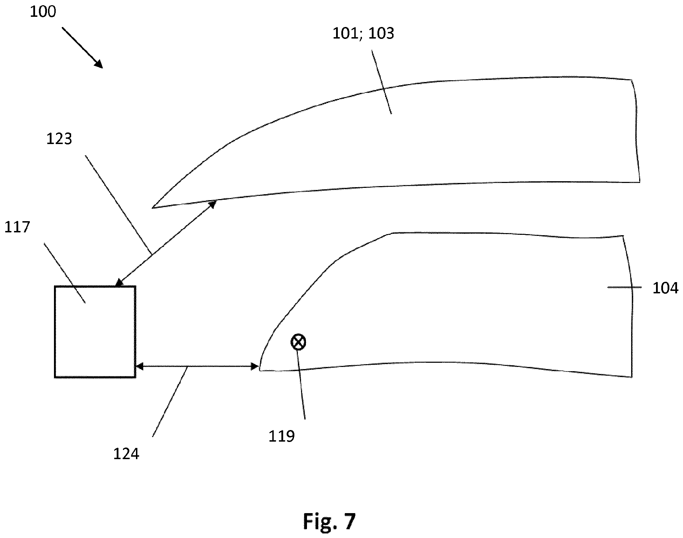

Figur 7 zeigt eine schematische Darstellung zum Signalaustausch zwischen den Sensoren 102 der Dachbox 103 bzw. des Fahrzeugdaches 101, einem Bordcomputer 117 sowie weiteren Sensoren und/oder Wiedergabegeräten, auch als Endgeräte und Applikationen bezeichnet, im Fahrzeuginnenraum 104. Beispielhaft ist für die weiteren Sensoren ein Mikrophon 119 im Fahrzeuginnenraum 104 eingezeichnet. Die Sensoren 102 der Dachbox 103 bzw. des Fahrzeugdaches 101 sind mit dem Bordcomputer 117 über eine erste Signalverbindung 123 verbunden zum Zuführen von Sensorsignalen an den Bordcomputer 117. Der Bordcomputer 117 ist mit den weiteren Sensoren 119 und/oder den Wiedergabegeräten im Fahrzeuginnenraum 104 über eine zweite Signalverbindung 124 verbunden zum Zuführen von Sensorsignalen der weiteren Sensoren 119 an den Bordcomputer 117 und/oder zum Zuführen von Wiedergabesignalen vom Bordcomputer 117 an die Wiedergabegeräte im Fahrzeuginnenraum 104. Im Bordcomputer 117 erfolgt eine Umrechnung der Sensorsignale in die Wiedergabesignale.

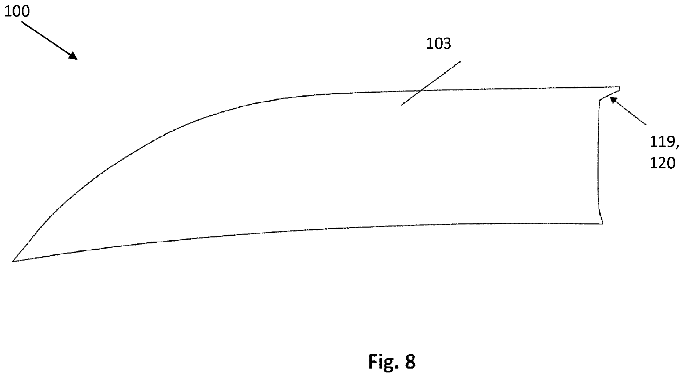

Figur 8 zeigt eine Darstellung einer Dachbox 103 mit einem Ausführungsbeispiel für eine Anbringung wenigstens eines Mikrophons 119 und wenigstens eines Lautsprechers 120, hier jedoch vorgesehen für eine Schallaufnahme in einer Umgebung, bevorzugt einer unmittelbaren Umgebung, des Kraftfahrzeugs 100, bzw. für eine Audiowiedergabe in der Umgebung, bevorzugt der unmittelbaren Umgebung, des Kraftfahrzeugs 100. Besonders bevorzugt sind das wenigstens eine Mikrophon 119 und/oder der wenigstens eine Lautsprecher 120 in einem hinteren Bereich der Dachbox 103, insbesondere an deren Rückwand, angeordnet und so besonders gut gegen insbesondere Fahrtwind und/oder Witterungseinflüsse geschützt.

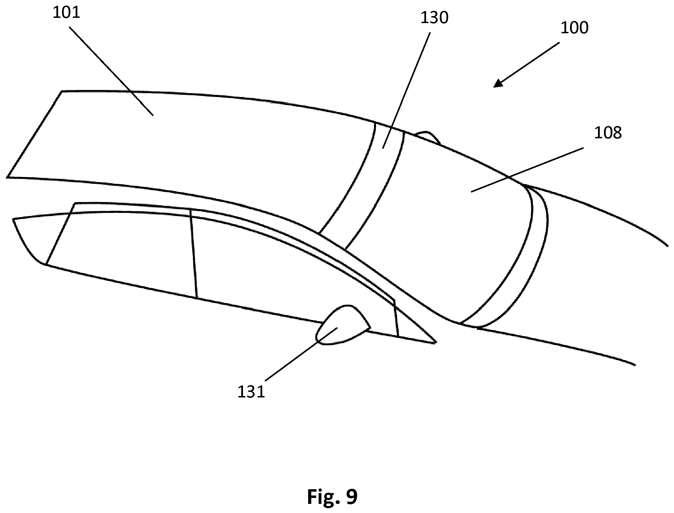

Figur 9 zeigt eine perspektivische Darstellung eines weiteren Ausführungsbeispiels eines Fahrzeugdaches 101, ausgestattet mit einer Windschutzscheibe 108, die in einem oberen, an das Fahrzeugdach 101 angrenzenden Bereich 130 mit wenigstens einer Wiedergabeeinrichtung, insbesondere Bildwiedergabeeinrichtung, ausgebildet ist, in einer weiteren Vorderansicht von schräg oben außen. Der Bereich 130 weist in diesem Beispiel sowohl an einer dem Fahrzeuginnenraum 104 des Fahrzeugs 100 zugewandten Innenfläche als auch an einer der Umgebung zugewandten Außenfläche der Windschutzscheibe 108 je wenigstens eine Wiedergabeeinrichtung, insbesondere Bildwiedergabeeinrichtung, auf. Der Bereich 130 ist dadurch sowohl mit einer Sonnenblendenfunktion als auch mit Anzeigefunktionen ausgebildet, wobei sowohl für die Nutzer, insbesondere den Fahrer, zum Innenraum hin als auch für andere Verkehrsteilnehmer in der Umgebung nach außen hin Informationen wiedergegeben werden können. Als Beispiel ist eine Anzeige eines Navigationssystems oder eine Bildwiedergabe einer Rückfahr- bzw. Rückspiegelkamera, die hier einen Innen-Rückspiegel konventioneller Bauform ersetzt, für die Anzeige im Fahrzeuginnenraum 104 genannt. Bei diesem Ausführungsbeispiel sind noch herkömmliche Außen-Rückspiegel 131 vorgesehen, jedoch können auch diese in einer Weiterbildung durch eine Bildwiedergabe auf der Innenfläche der Windschutzscheibe 108 im Bereich 130 ersetzt werden. Als Beispiel für eine Wiedergabe auf der Außenfläche der Windschutzscheibe 108 kann im Bereich 130 etwa eine Taxianzeige, eine Vignette, eine Parkscheibe oder eine Abgas- bzw. Umweltplakette angezeigt werden.

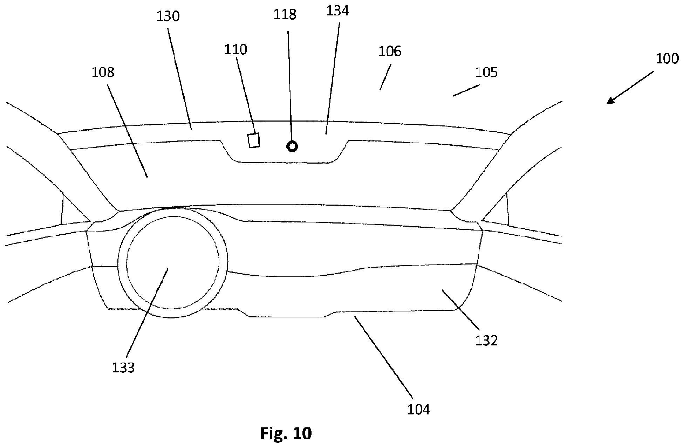

Figur 10 zeigt eine perspektivische Darstellung des Fahrzeuginnenraums 104 des Ausführungsbeispiels nach Figur 9 mit Blick in Fahrtrichtung auf die Armaturentafel 132 mit dem Lenkrad 133 und die im Bereich 130 mit wenigstens einer Wiedergabeeinrichtung, insbesondere Bildwiedergabeeinrichtung, ausgebildete Windschutzscheibe 108. Bevorzugt in einem Teilbereich 134 auf der Innenfläche der Windschutzscheibe 108 innerhalb des Bereichs 130 sind Bedienelemente, insbesondere Berühr-Bedienelemente mit einer "Touchscreenfunktion" 110, und/oder Sensoren, z.B. ein Gesichtserkennungssensor 118, angeordnet. Diese Sensoren 118 sind z.B. als Kameras ausgebildet und dazu eingerichtet, eine Bewegung und/oder Geste, bevorzugt eine Kopfbewegung, Kopfposition oder Blickrichtung der Augen, des Fahrers zu erfassen und danach die Bildwiedergabe der Rückfahr- bzw. Rückspiegelkamera zu steuern, insbesondere die Größe dieser Bildwiedergabe.

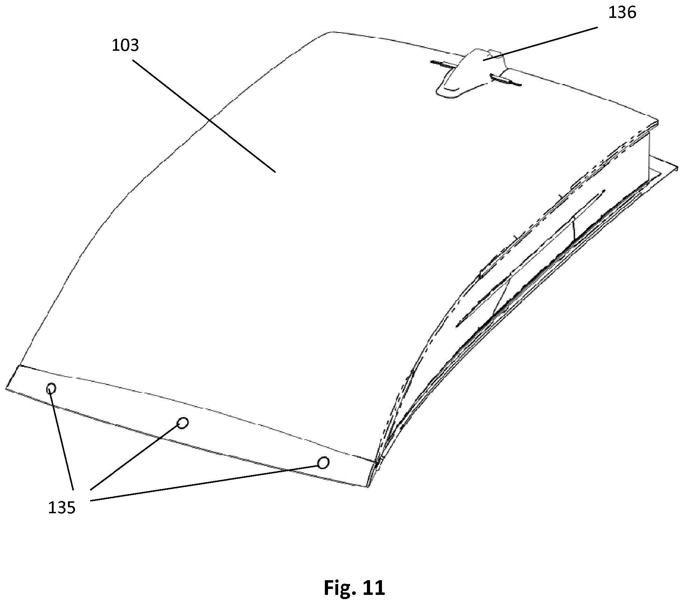

Figur 11 zeigt eine perspektivische Darstellung eines Ausführungsbeispiels für eine erfindungsgemäß mit mehreren Höhensensoren 135 ausgestattete Dachbox 103 für ein Kraftfahrzeug 100 gemäß einem der vorstehenden Ausführungsbeispiele. Die Dachbox ist im ausgeklappten Zustand wiedergegeben. Drei der Höhensensoren 135 sind an der vorderen Kante des Deckels der Dachbox 103 angebracht. Ferner ist ein Aufnahmegehäuse 136 an der hinteren Kante des Deckels der Dachbox 103 angebracht, d.h. am höchsten Punkt des damit ausgestatteten Kraftfahrzeugs 100. Im Aufnahmegehäuse 136 sind außer wenigstens einem der Höhensensoren 135 bevorzugt Erkennungsmittel für autonomes Fahren angeordnet sein, z.B. Laserscanner, optische Sensoren sonstiger Bauart, Ultraschallsensoren, Radarsensoren oder dergleichen.

In einem bevorzugten Beispiel sind die Höhensensoren 135 in der Art von Näherungssensoren ausgebildet, können aber auch z.B. mit einer oder mehreren Kameras versehen sein. Durch den Höhensensor 135 bzw. die Höhensensoren 135 wird eine Annäherung des Kraftfahrzeugs 100, insbesondere des Deckels der Dachbox 103, an ein eine Fahrstrecke des Kraftfahrzeugs 100 in der Höhe begrenzendes Hindernis erkannt und z.B. ein Warnsignal an den Fahrer gegeben. Auch umfangreichere Informationen, z.B. Kamerabilder des Hindernisses, können erzeugt und übertragen werden.

Auch das Fahrzeugdach 101 eines Kraftfahrzeugs 100 kann, sofern keine Dachbox 103 montiert ist, unmittelbar mit Höhensensoren 135 ausgestattet sein. Wird nachträglich eine Dachbox 103 montiert, d.h. nachgerüstet, werden vorteilhaft auf der Dachbox 103 angeordnete Sensoren, insbesondere auch Höhensensoren 135, zusätzlich oder an Stelle der Sensoren am Fahrzeugdach 101 an den Bordcomputer 117 angeschlossen.

### Bezugszeichenliste

- 100: Kraftfahrzeug
- 101: Fahrzeugdach
- 102: Sensoren
- 103: Dachbox, insbesondere integrierbar und/oder faltbar
- 104: Fahrzeuginnenraum
- 105: Dachhimmel
- 106: virtuelles Panorama- bzw. Schiebedach
- 107: heruntergeklappter Teil des Monitors/Displays
- 108: Windschutzscheibe
- 109: Bedienelemente am Dachhimmel 105
- 110: Touchscreenfunktion
- 111: umklappbare Sonnenblenden
- 112: verfahrbare Sonnenblenden und/oder Luftauslässe
- 113: Fahrzeugkarosse
- 114: Boden-/Wannenelement der Dachbox 103
- 115: Vertiefungen
- 116: Quersäulen
- 117: Bordcomputer
- 118: Gesichtserkennungssensor an 105
- 119: Mikrofon
- 120: Lautsprecher
- 121: Dämpfungen
- 122: Leselampen und/oder Bräunungslampen
- 123: Erste Signalverbindung
- 124: Zweite Signalverbindung
- 130: Bereich von 108 mit Sonnenblenden- und Anzeigefunktion
- 131: Außen-Rückspiegel herkömmlicher Bauform
- 132: Armaturentafel
- 133: Lenkrad
- 134: Teilbereich von 130 auf Innenfläche von 108
- 135: Höhensensor auf Deckel von 103
- 136: Aufnahmegehäuse für 135, Antennen u.a.

## Patentansprüche

1. Anordnung für ein Dach eines Kraftfahrzeugs, umfassend wenigstens eine Sensoreinrichtung, insbesondere Bildaufnahmeeinrichtung, zum Erfassen einer Umgebung des Kraftfahrzeugs, insbesondere zum bildlichen Aufnehmen dieser Umgebung, sowie wenigstens eine Wiedergabeeinrichtung, insbesondere Bildwiedergabeeinrichtung, die wenigstens an einer Innenfläche des Daches, insbesondere in einer Position eines Schiebe- und/oder Panoramadaches, angeordnet ist zum Wiedergeben einer virtuellen Darstellung, insbesondere einer virtuellen bildlichen Darstellung, wenigstens der von der wenigstens einen Sensoreinrichtung aufgenommenen Umgebung, wobei die virtuelle Darstellung im Wesentlichen gleich einer Wahrnehmung, insbesondere Ansicht, der Umgebung des Kraftfahrzeuges ist,
wobei das Dach mit einer, insbesondere faltbaren und/oder integrierbaren, Dachbox ausgebildet ist und wobei wenigstens eine der wenigstens einen Sensoreinrichtung an der Dachbox, insbesondere in, an und/oder auf einem Deckel der Dachbox, angeordnet ist.

2. Anordnung nach Anspruch 1,
**dadurch gekennzeichnet, dass**
die virtuelle Darstellung, insbesondere die virtuelle bildliche Darstellung, der von der wenigstens einen Sensoreinrichtung aufgenommenen Umgebung den Bedürfnissen eines Benutzers anpassbar ist, insbesondere, dass dazu die wenigstens eine Sensoreinrichtung, insbesondere Bildaufnahmeeinrichtung, und/oder die wenigstens eine Wiedergabeeinrichtung, insbesondere Bildwiedergabeeinrichtung, einstellbar, insbesondere durch den Benutzer einstellbar, ausgebildet ist/sind.

3. Anordnung nach Anspruch 1 oder 2,
**dadurch gekennzeichnet, dass**
die wenigstens eine Wiedergabeeinrichtung, insbesondere Bildwiedergabeeinrichtung, wenigstens an einem die Innenfläche des Daches bildenden Dachhimmel sich im Wesentlichen entlang des gesamten Dachhimmels, insbesondere wenigstens nahezu bis zur Windschutzscheibe, d.h. Frontscheibe, des Kraftfahrzeugs und/oder wenigstens über einen Teilbereich wenigstens der Windschutzscheibe sich erstreckend angeordnet ist.

4. Anordnung nach einem oder mehreren der vorhergehenden Ansprüche, **dadurch gekennzeichnet, dass**
wenigstens ein oberer Bereich wenigstens der Windschutzscheibe an deren Innen- und/oder Außenfläche mit wenigstens einer Wiedergabeeinrichtung, insbesondere Bildwiedergabeeinrichtung, ausgebildet ist zum
• wahlweisen Wiedergeben einer virtuellen Darstellung wenigstens eines Ausschnitts der Umgebung, insbesondere einer vorderen und/oder rückwärtigen Umgebung, bevorzugt zum Innenraum des Kraftfahrzeugs hin, und/oder
• wahlweisen Wiedergeben einer virtuellen Darstellung wenigstens eines Teilbereichs des Innenraums, insbesondere eines Fahrers des Kraftfahrzeugs, zum Innenraum und/oder zur Umgebung des Kraftfahrzeugs hin und/oder
• wahlweisen Wiedergeben wenigstens einer virtuellen Darstellung wenigstens einer Information, insbesondere eines Fahrzeug-Anzeigeinstruments, bevorzugt einer Navigationsanzeige oder wenigstens eines Fahrzeug-Betriebszustands, bevorzugt zum Innenraum des Kraftfahrzeugs hin, und/oder
• wahlweisen Wiedergeben wenigstens einer virtuellen Darstellung wenigstens einer Information bevorzugt zur Umgebung des Kraftfahrzeugs hin, insbesondere zur Darstellung einer Vignette, einer Fahrschul-, Taxi-, Parkberechtigungs-, Umweltplaketten- und/oder Werbeanzeige, und/oder
• wahlweisen wenigstens teilweisen Abblenden einer Durchsichtigkeit des wenigstens oberen Bereichs wenigstens der Windschutzscheibe zum Bilden einer Licht-, insbesondere Sonnenblende.

5. Anordnung nach Anspruch 4, **dadurch gekennzeichnet, dass** zum Steuern der Wiedergaben wenigstens ein Sensorsignal von wenigstens einem Sensor herangezogen wird, wobei der wenigstens eine Sensor zum Erfassen einer Einfallsrichtung des Sonnenlichts und/oder zum Erfassen einer Bewegung und/oder Geste und/oder Blickrichtung wenigstens eines Nutzers des Kraftfahrzeugs, insbesondere des Fahrers, ausgebildet ist.

6. Anordnung nach Anspruch 5, **dadurch gekennzeichnet, dass** der wenigstens eine Sensor in der Weise herangezogen wird,
- dass das wenigstens teilweise Abblenden der Durchsichtigkeit des wenigstens oberen Bereichs wenigstens der Windschutzscheibe zum Bilden der Licht-, insbesondere Sonnenblende, abhängig von der Einfallsrichtung des Sonnenlichts vorgenommen ist und/oder
- dass das wahlweise Wiedergeben der virtuellen Darstellung des wenigstens einen Ausschnitts der Umgebung, insbesondere der vorderen und/oder rückwärtigen Umgebung, und/oder des wenigstens einen Teil- bereichs des Innenraums, bevorzugt zum Innenraum des Kraftfahrzeugs hin, in Abhängigkeit von der Bewegung und/oder Geste und/oder Blick- richtung des wenigstens einen Nutzers des Kraftfahrzeugs, insbesondere des Fahrers, vorgenommen ist.

7. Anordnung nach einem oder mehreren der vorhergehenden Ansprüche, **dadurch gekennzeichnet, dass**
die wenigstens eine Wiedergabeeinrichtung, insbesondere Bildwiedergabeeinrichtung, wenigstens teilweise mit einem Berührbildschirm ausgebildet ist, bevorzugt, dass über diesen Berührbildschirm die Wiedergabe der virtuellen Darstellung der Umgebung steuerbar ist, besonders bevorzugt ferner weitere Einrichtungen des Kraftfahrzeugs, insbesondere Einrichtungen eines Innenraums des Kraftfahrzeugs, besonders vorteilhaft Lichtstrahler, Leselampen und/oder Sonnenblenden, steuerbar und/oder bedienbar und/oder einstellbar sind.

8. Anordnung nach einem oder mehreren der vorhergehenden Ansprüche, **dadurch gekennzeichnet, dass**
die wenigstens eine Wiedergabeeinrichtung, insbesondere Bildwiedergabeeinrichtung, wenigstens zwei Teilwiedergabeeinrichtungen umfasst, von denen wenigstens eine vordere wenigstens überwiegend in einem vorderen Bereich des Daches und wenigstens eine hintere wenigstens überwiegend in einem hinteren Bereich des Daches angeordnet ist, und dass bevorzugt eine räumliche Position wenigstens einer der Teilwiedergabeeinrichtungen, bevorzugt der wenigstens einen hinteren Teilwiedergabeeinrichtung, einstellbar und/oder steuerbar ist, insbesondere, dass die wenigstens eine der Teilwiedergabeeinrichtungen, bevorzugt wenigstens eine der wenigstens einen hinteren Teilwiedergabeeinrichtung, klappbar und/oder drehbar, besonders bevorzugt herunterklappbar, ausgebildet ist.

9. Anordnung nach einem oder mehreren der vorhergehenden Ansprüche **dadurch gekennzeichnet, dass**
die Dachbox ein Bodenelement bzw. ein Wannenelement, d.h. wannenartiges Bodenelement, aufweist,
wobei das Bodenelement bzw. Wannenelement wenigstens eine Vertiefung zwischen Quersäulen des Daches aufweist.

10. Anordnung nach Anspruch 9,
**dadurch gekennzeichnet, dass**
das Bodenelement bzw. Wannenelement mit wenigstens einem Dämpfungselement, insbesondere wenigstens einer Dämpfungsmatte (21), ausgebildet ist, das sowohl einen Schallschutz als auch eine Dämpfung für in der Dachbox zu lagernde Gegenstände bildet, wobei bevorzugt das wenigstens eine Dämpfungselement, insbesondere die wenigstens eine Dämpfungsmatte (21L in der wenigstens einen Vertiefung angeordnet ist.

11. Anordnung nach einem der Ansprüche 9 oder 10,
**dadurch gekennzeichnet, dass**
die wenigstens eine Wiedergabeeinrichtung, insbesondere Bildwiedergabeeinrichtung, an der Innenfläche des Daches, insbesondere in der Position des Schiebe- und/oder Panoramadaches, wenigstens teilweise im Bereich unter- halb der wenigstens einen Vertiefung des Bodenelements bzw. Wannenele- ments angeordnet ist.

## Claims

1. An arrangement for a roof of a motor vehicle, comprising at least one sensor device, in particular an image recording device, for detecting an environment of the motor vehicle, in particular for imaging this environment, as well as at least one display device, in particular image display device, which is at least arranged at an inner surface of the roof, in particular in a position of a sliding and / or panoramic roof, to display a virtual representation, in particular a virtual pictorial representation, of at least the environment recorded by the at least one sensor device, wherein the virtual representation is essentially equal to a perception, in particular view, of the environment of the motor vehicle, wherein the roof is configured with an, in particular foldable and/or integrable roof box, and wherein at least one of the at least one sensor device is arranged at the roof box, in particular in, at and / or on a lid of the roof box.

2. Arrangement according to claim 1,
**characterized in that**
the virtual representation, in particular the virtual pictorial representation, of the environment recorded by the at least one sensor device can be adapted to the needs of a user, in particular, that the at least one sensor device, in particular image recording device, and / or the at least one display device, in particular image display device, is configured adjustable, in particular adjustable by the user.

3. Arrangement according to claim 1 or 2,
**characterized in that**
the at least one display device, in particular image display device, at least on a roof liner forming the inner surface of the roof is essentially arranged extending along the entire roof liner, in particular at least almost up to the windshield, i.e. front window, of the motor vehicle and / or at least over a partial area of at least the windshield.

4. Arrangement according to one or more of the preceding claims, **characterized in that**
at least one upper region of at least the windshield on its inner and / or outer surface is configured with at least one display device, in particular image display device, for
• optional displaying a virtual representation of at least a section of the environment, in particular of a front and / or rear environment, preferably towards the interior of the motor vehicle, and / or
• optional displaying a virtual representation of at least a portion of the interior, in particular a driver of the motor vehicle, towards the interior and / or the environment of the motor vehicle and / or
• optional displaying at least one virtual representation of at least one piece of information, in particular of a vehicle display instrument, preferably of a navigation display or of at least one vehicle operating state, preferably towards the interior of the motor vehicle, and / or
• optional displaying at least one virtual representation of at least one piece of information, preferably towards the environment of the motor vehicle, in particular for displaying a vignette, a display for a driving school, a taxi, a parking permit, an environmental badge and / or an advertisement, and/or
• optional at least partial dimming a transparency of the at least upper area of at least the windshield to form a light visor, in particular sun visor.

5. Arrangement according to claim 4, **characterized in that** for controlling the displayings at least one sensor signal is used by at least one sensor, wherein the at least one sensor is configured for detecting a direction of incidence of the sunlight and / or for detecting a movement and / or gesture and / or direction of view of at least one user of the motor vehicle, in particular the driver.

6. Arrangement according to claim 5, **characterized in that** the at least one sensor is used in such a way that
• the at least partial dimming of the transparency of the at least upper area of at least the windshield for forming the light visor, in particular sun visor, is carried out depending on the direction of incidence of the sunlight and / or
• that the optional display of the virtual representation of the at least one section of the environment, in particular of the front and / or rear environment, and / or of the at least one partial area of the interior, preferably towards the interior of the motor vehicle, is carried out depending on the movement and / or gesture and / or direction of view of the at least one user of the motor vehicle, in particular the driver.

7. Arrangement according to one or more of the preceding claims, **characterized in that**
the at least one display device, in particular an image display device, is at least partially configured with a touch screen, preferably that the display of the virtual representation of the environment can be controlled via this touch screen, particularly preferably further devices of the motor vehicle, in particular devices of an interior of the motor vehicle, particularly advantageously light emitters, reading lamps and / or sun visors can be controlled and / or operated and / or adjusted.

8. Arrangement according to one or more of the preceding claims, **characterized in that**
the at least one display device, in particular image display device, comprises at least two partial display devices, of which at least one front display device is arranged at least predominantly in a front area of the roof and at least one rear display device is arranged at least predominantly in a rear area of the roof, and **in that** preferably a spatial position of at least one of the partial display devices, preferably of the at least one rear partial display device, is adjustable and/or controllable, in particular **in that** the at least one of the partial display devices, preferably at least one of the at least one rear partial display device, can be folded and / or rotated, particularly preferably can be folded down.

9. Arrangement according to one or more of the preceding claims, **characterized in that**
the roof box has floor element or a trough element, i.e. a trough-like floor element,
wherein the floor element or trough element has at least one depression between transverse columns of the roof.

10. Arrangement according to claim 9,
**characterized in that**
the floor element or trough element is configured with at least one damping element, in particular at least one damping mat (21), which forms both soundproofing and damping for objects to be stored in the roof box, wherein preferably the at least one damping element, in particular the at least one damping mat (21), is arranged in the at least one depression.

11. Arrangement according to one of claims 9 or 10,
**characterized in that**
the at least one display device, in particular image display device, on the inner surface of the roof, in particular in the position of the sliding and / or panoramic roof, is at least partially arranged in the area below the at least one depression of the floor element or trough element.

## Revendications

1. Agencement pour un toit d'un véhicule automobile comprenant au moins un dispositif de détection, en particulier un dispositif de prise de vue pour saisir un environnement d'un véhicule automobile, en particulier pour l'enregistrement visuel de cet environnement, ainsi qu'au moins un dispositif de retransmission, en particulier un dispositif de retransmission de vue, qui est au moins disposé sur une surface intérieure du toit, en particulier dans une position d'un toit ouvrant et/ou panoramique pour retransmettre une représentation virtuelle, en particulier une représentation virtuelle visuelle, au moins de l'environnement pris par l'au moins un dispositif de détection, sachant que la représentation virtuelle est pour l'essentiel identique à une perception, en particulier une vue, de l'environnement du véhicule automobile,
sachant que le toit est constitué d'un coffre de toit en particulier repliable et/ou intégrable et sachant qu'au moins un de l'au moins un dispositif de détection est disposé sur le coffre de toit, en particulier dans, à côté et/ou sur un couvercle du coffre de toit.

2. Agencement selon la revendication 1,
**caractérisé en ce que**
la représentation virtuelle, en particulier la représentation virtuelle visuelle de l'environnement pris par l'au moins un dispositif de détection peut être adaptée aux besoins d'un utilisateur, en particulier **en ce qu'**à cet effet, l'au moins un dispositif de détection, en particulier un dispositif de prise de vue et/ou l'au moins un dispositif de retransmission, en particulier un dispositif de retransmission de vue est/sont constitué(s) réglable(s) en particulier réglables par l'utilisateur.

3. Agencement selon la revendication 1 ou 2, **caractérisé en ce que l'** au moins un dispositif de retransmission, en particulier un dispositif de retransmission de vue, est situé au moins sur un ciel de pavillon formant la surface intérieure du toit s'étendant pour l'essentiel le long de tout le ciel de pavillon, en particulier au moins presque jusqu'au pare-brise, c'est-à-dire la vitre avant, du véhicule automobile et/ou au moins sur une partie de zone au moins du pare-brise.

4. Agencement selon l'une ou plusieurs quelconque(s) des revendications précédentes,
**caractérisé en ce qu'**
au moins une zone supérieure au moins du pare-brise est constituée sur sa surface intérieure et/ou extérieure avec au moins un dispositif de retransmission, en particulier un dispositif de retransmission de vue pour
• retransmettre sélectivement une représentation virtuelle d'au moins une section de l'environnement, en particulier d'un environnement avant et/ou arrière, de préférence vers l'habitacle du véhicule automobile,
et/ou
• retransmettre sélectivement une représentation virtuelle d'au moins une partie de zone de l'habitacle, en particulier d'un conducteur du véhicule automobile, vers l'habitacle et/ou l'environnement du véhicule automobile,
et/ou
• retransmettre sélectivement au moins une reproduction virtuelle d'au moins une information, en particulier d'un instrument d'affichage du véhicule, de préférence d'un affichage de navigation ou au moins d'un état de fonctionnement du véhicule, de préférence vers l'habitacle du véhicule automobile,
et/ou
• retransmettre sélectivement au moins une représentation virtuelle d'au moins une information, de préférence vers l'environnement du véhicule automobile, en particulier pour la représentation d'une vignette, d'un affichage d'auto-école, de taxi, d'autorisation de parking, de plaquettes écologiques et/ou publicitaire, et/ou
• masquer au moins en partie sélectivement une transparence d'au moins la zone supérieure au moins du pare-brise pour former un pare-lumière, en particulier un pare-soleil.

5. Agencement selon la revendication 4,
**caractérisé en ce que**
pour commander la retransmission, on fait appel à au moins un signal de détection d'au moins un capteur, sachant que l'au moins un capteur est constitué pour saisir une direction d'incidence de la lumière solaire et/ou saisir un mouvement et/ou un geste et/ou une direction de visibilité d'au moins un utilisateur du véhicule automobile, en particulier du conducteur.

6. Agencement selon la revendication 5, **caractérisé en ce qu'**on fait appel à l'au moins un capteur de telle manière
• que le masquage au moins en partie de la transparence d'au moins la zone supérieure au moins du pare-brise pour former le pare-lumière, en particulier le pare-soleil, est pratiqué en fonction de la direction d'incidence de la lumière solaire, et/ou
• que la retransmission sélective de la représentation virtuelle de l'au moins une section de l'environnement, en particulier de l'environnement avant et/ou arrière, et/ou de l'au moins une partie de zone de l'habitacle, est pratiquée de préférence vers l'habitacle du véhicule automobile en fonction du mouvement et/ou du geste et/ou de la direction de visibilité d'au moins un utilisateur du véhicule automobile, en particulier du conducteur.

7. Agencement selon l'une ou plusieurs quelconque(s) des revendications précédentes,
**caractérisé en ce que l'**
au moins un dispositif de retransmission, en particulier un dispositif de retransmission de vue, est constitué au moins en partie avec un écran tactile, de préférence, **en ce que** la retransmission de la représentation virtuelle de l'environnement peut être commandée par cet écran tactile, **en ce qu'**en particulier de préférence en outre d'autres dispositifs de véhicule automobile, en particulier des dispositifs d'un habitacle de véhicule automobile, de façon particulièrement avantageuse des projecteurs, des lampes de lecture et/ou des pare-soleil peuvent être en plus commandés et/ou utilisés et/ou réglés.

8. Agencement selon l'une ou plusieurs quelconque(s) des revendications précédentes
**caractérisé en ce que l'**
au moins un dispositif de retransmission, en particulier un dispositif de retransmission de vue, comprend au moins deux dispositifs de retransmission partielle, dont au moins un avant est disposé au moins essentiellement dans une zone avant du toit et au moins un arrière est disposé au moins essentiellement dans une zone arrière du toit et **en ce que** de préférence une position spatiale d'au moins un des dispositifs de retransmission partielle, de préférence au moins un dispositif de retransmission partielle arrière, peut être réglé et/ou commandé, en particulier, **en ce qu'**au moins un des dispositifs de retransmission partielle, de préférence au moins un dispositif de retransmission arrière, est constitué pouvant être rabattu et/ou tourné, en particulier de préférence rabattu vers le bas.

9. Agencement selon l'une ou plusieurs quelconque(s) des revendications précédentes,
**caractérisé en ce que**
le coffre de toit comporte un élément de fond ou un élément de bac, c'est-à-dire un élément de fond de type bac,
sachant que l'élément de fond ou l'élément de bac comporte au moins un évidement entre les montants transversaux du toit.

10. Agencement selon la revendication 9,
**caractérisé en ce que**
l'élément de fond ou l'élément de bac est constitué avec au moins un élément d'amortissement, en particulier une natte d'isolation (21), qui forme aussi bien une isolation acoustique qu'une isolation pour des objets à loger dans le coffre de toit, sachant que de préférence l'au moins un élément d'isolation, en particulier l'au moins une natte d'isolation (21), est logé dans l'au moins un évidement.

11. Agencement selon l'une quelconque des revendications 9 ou 10, **caractérisé en ce que l'**
au moins un dispositif de retransmission, en particulier un dispositif de retransmission d'image est disposé sur la surface intérieure du toit, en particulier dans la position du toit ouvrant et/ou panoramique, au moins en partie dans la zone située en dessous de l'au moins un évidement de l'élément de fond ou de l'élément de bac.
